# FASCICULE DE BREVET EUROPEEN

(11) **EP 1 075 404 B1**
(45) Date de publication et mention de la délivrance du brevet: **15.10.2003**
(21) Numéro de dépôt: 00906463.5
(22) Date de dépôt: 25.02.2000
(51) Int. Cl.: B60T 11/16

(54) **DISPOSITIF PERFECTIONNE DE COMMANDE HYDRAULIQUE D'UN EMBRAYAGE DE VEHICULE AUTOMOBILE**
HYDRAULISCHE KUPPLUNGSBETÄTIGUNGSVORRICHTUNG FÜR KRAFTFAHRZEUGE
IMPROVED HYDRAULIC CONTROL DEVICE FOR MOTOR VEHICLE CLUTCH

(30) Priorité: 26.02.1999 FR 9902428
(43) Date de publication de la demande: 14.02.2001
(73) Titulaire: VALEO, 75017 Paris (FR)
(72) Inventeur: ANGIONE, Pasquale, F-75019 Paris (FR)
(86) Numéro de dépôt international: FR0000480
(87) Numéro de publication internationale: WO00050280

(56) Documents cités:
- EP-A- 0 345 451
- FR-A- 2 741 920
- GB-A- 2 171 847

## Description

L'invention concerne un dispositif perfectionné de commande hydraulique de freinage ou d'un embrayage de véhicule automobile dans lequel un cylindre émetteur, ou récepteur, comporte un tube arrière de guidage emboîté axialement dans un corps principal du cylindre.

L'invention concerne plus particulièrement un dispositif de commande hydraulique d'un embrayage de véhicule automobile, du type comportant au moins un cylindre de commande, dans lequel le cylindre comporte un corps de cylindre sensiblement tubulaire dans lequel coulisse axialement un piston qui délimite, par une face transversale avant, une chambre hydraulique cylindrique, dans lequel un orifice de raccordement d'une canalisation débouche dans la chambre hydraulique, dans lequel le corps de cylindre est réalisé au moins en deux parties en matière synthétique, telle que de la matière plastique, qui comprennent un corps principal et un tube arrière de guidage, qui est rapporté dans une partie arrière du corps principal et qui participe au guidage du piston dans le cylindre.

Un tel type de cylindre est connu et a notamment été décrit et représenté dans la demande de brevet européen EP-A-0 345 451.

Dans ce document, le tube arrière et le corps principal sont réalisés en matière plastique et ils sont munis chacun d'un filetage de manière à pouvoir assembler le tube arrière par vissage dans le corps principal.

Ce type d'assemblage présente l'inconvénient d'être délicat à réaliser et relativement fragile, étant donné qu'il s'agit de pièces en matière plastique.

De plus, l'assemblage par vissage nécessite qu'il existe entre le tube arrière et le corps principal un jeu radial suffisant pour permettre le vissage et pour compenser les éventuels défauts de forme du filetage.

De la sorte, on ne peut garantir l'obtention d'une coaxialité parfaite entre le tube arrière et le corps principal, ce qui est pourtant nécessaire pour garantir un bon coulissement du piston dans le cylindre.

Dans le but d'apporter une solution à ces problèmes, il est décrit dans le document FR-A-2 741 920, une réalisation dans laquelle le tube arrière et le corps principal coopèrent par des surfaces cylindriques complémentaires pour permettre un assemblage par emboîtement axial du tube arrière dans le corps principal.

L'assemblage du tube arrière dans le corps principal est réalisé par soudage ou par collage étanche.

Le collage ou le soudage est effectué au moins en partie entre les deux surfaces cylindriques complémentaires du tube arrière et du corps principal .

Le tube arrière porte au moins un joint annulaire d'étanchéité dynamique qui intervient entre le piston et le tube arrière pour assurer l'étanchéité de la chambre hydraulique.

Le corps de cylindre est réalisé en matière plastique et le piston est réalisé en métal.

Cette réalisation donne satisfaction néanmoins dans le cas d'un soudage, il faut ménager le joint d'étanchéité dynamique. En outre il est souhaitable d'avoir des pièces en matière plastique de conception simple.

La présente invention a pour objet de répondre à ces souhaits.

Suivant l'invention un dispositif du type décrit précédemment est caractérisé en ce que le soudage du tube arrière avec le corps principal est réalisé localement par apport indirect de chaleur à l'aide d'au moins une source d'énergie du type laser.

Ainsi, on ménage le joint d'étanchéité dynamique puisque le soudage est réalisé localement et précisément par apport indirect de chaleur au moyen d'un faisceau laser.

En outre contrairement à une soudure du type à ultrason, il n'y a pas de vibrations transmises au tube arrière et au corps principal ce qui permet également de ménager ces pièces, ainsi que le joint d'étanchéité dynamique.

La solution selon l'invention est donc moins coûteuse puisqu'elle permet la réalisation de pièces de conception simplifiée par rapport aux pièces soudées par ultrason.

En effet cet assemblage laisse une plus grande liberté dans la conception des pièces car on a pas besoin de rapprocher une sonotrode le plus près possible de la zone à souder comme c'est le cas dans une soudure à ultrason. Le plan de soudure peut être incliné. On peut souder en plusieurs zones le tube arrière avec le corps principal, l'une des zones pouvant être continue et l'autre pas. De nouvelles formes sont envisageables notamment pour standardiser le cylindre de commande.

Ainsi dans une forme de réalisation préférée, le corps de cylindre est réalisé en trois pièces et comporte une pièce centrale agencée entre une pièce avant borgne et le tube arrière formant chemise de guidage. Le corps principal est ainsi en deux pièces à savoir la pièce avant délimitant la chambre hydraulique et la pièce centrale constituant la partie arrière du corps principal dans laquelle est rapportée le tube arrière de guidage. Le joint d'étanchéité est logé dans la pièce centrale dotée avantageusement de moyens de fixation, tels que des oreilles, à une partie fixe du véhicule.

Pour parfaire le soudage l'emboîtement du tube arrière dans le corps principal est réalisé à serrage radial, par exemple par emboîtement à force .

Selon l'invention, le rayonnement en forme de faisceau émis par le laser est dans le domaine du rayonnement infrarouge en sorte que le corps principal et le tube arrière de guidage peuvent être en matière plastique moulable et économique par exemple à base de polyamide chargé ou non.

Le corps principal est lorsque le laser est placé à l'extérieur, en matière transparente au rayonnement infrarouge, tandis que le tube arrière absorbe le rayonnement infrarouge. Ce tube est dans une forme de réalisation en matière distincte de celle du corps principal. En variante la matière est identique mais le tube arrière est doté d'au moins un additif tel que des pigments, par exemple 1 à 2 % de charbon pour absorber le rayonnement infrarouge.

Ainsi, le faisceau infrarouge émis par le laser traverse la pièce transparente sans la dégrader et chauffe en superficie la pièce absorbante comportant les additifs.

Lors de cette opération de soudage, on peut choisir de faire tourner la pièce par rapport au faisceau laser et vice versa.

D'autres caractéristiques et avantages de l'invention apparaîtront à la lecture de la description détaillée qui suit pour la compréhension de laquelle on se reportera aux dessins annexés dans lesquels :
- les figures 1 et 2 sont des vues en coupe axiale d'un cylindre récepteur conforme aux enseignement de l'invention, dans lequel le piston est représenté respectivement dans une première position avancée et dans une seconde position reculée ;
- la figure 3 représente un détail agrandi de la figure 1 ;
- la figure 4 est une vue analogue à la figure 1, dans laquelle le piston est représenté respectivement dans une première position avancée et dans une seconde position reculée ;
- la figure 5 est à plus grande échelle une vue de la partie médiane de la figure 4 ;
- la figure 6 est une vue partielle d'un troisième mode de réalisation de soudage.

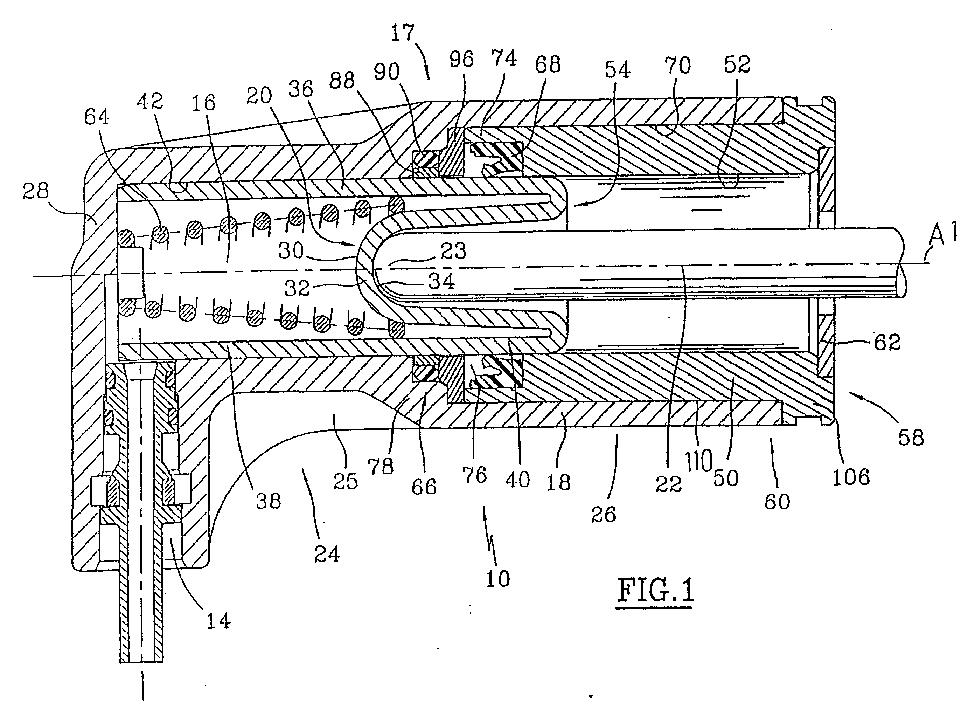

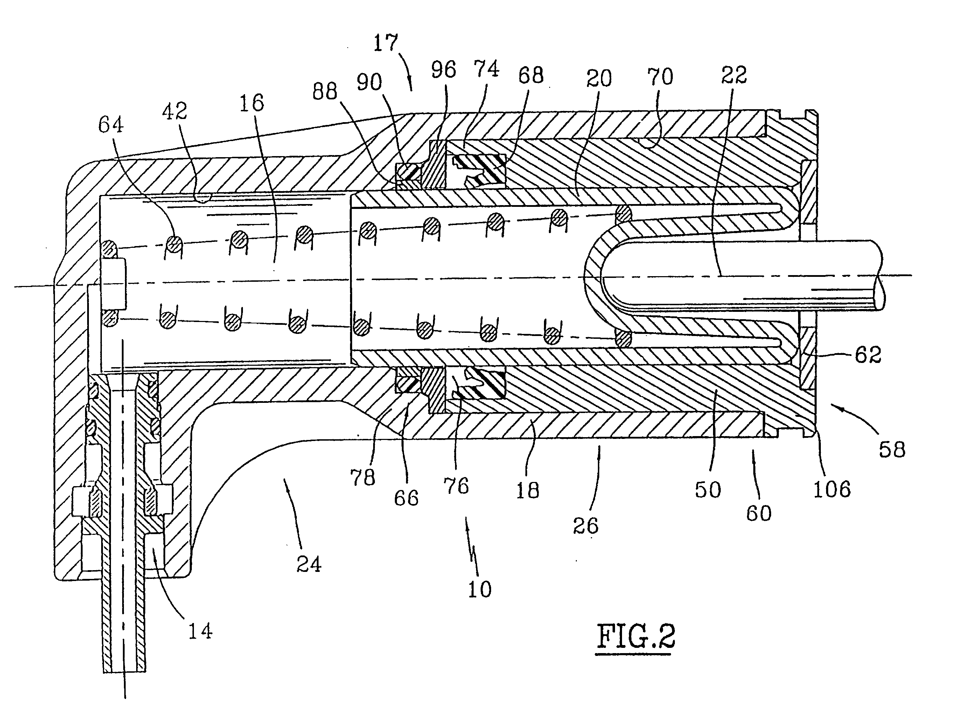

On a représenté sur les figures 1 et 2 un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation 12 qui relie le cylindre émetteur au cylindre récepteur 10.

La canalisation 12 débouche par un orifice d'entrée 14 à l'intérieur d'une chambre hydraulique 16 à volume variable délimitée dans un corps de cylindre 17 en matière synthétique, par exemple en matière plastique du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage. En variante, le piston agit en traction par l'intermédiaire d'un câble ou tout autre moyen sur la fourchette.

Le corps de cylindre 17 comporte un corps principal 18 en matière plastique qui présente une forme de tube étagé d'axe A1 et qui comporte une partie avant 24 de diamètre réduit par rapport à une partie arrière 26. Le diamètre interne de la partie avant 24 est donc inférieur au diamètre interne de la partie arrière 26.

Afin de rigidifier le corps de cylindre 17, il est prévu, tout autour de la partie avant 24 du corps principal 18, des nervures de rigidification 25. Le corps 18 est fermé vers l'avant et ouvert vers l'arrière.

Plus précisément la chambre hydraulique 16 est délimitée dans la partie avant 24 du corps de cylindre 17 et elle est délimitée axialement, à l'avant, par une paroi transversale avant 28 dans laquelle est formé l'orifice d'entrée 14, et, à l'arrière, par une face transversale avant 30 du piston 20.

On peut prévoir de munir la chambre hydraulique de rainures axiales (non représentées) qui sont par exemple réalisées venues de matière par moulage avec le corps principal 18 et qui sont agencées angulairement en correspondance avec les nervures de rigidification 25. Les rainures permettent notamment de garantir une meilleure répartition de la pression de contact entre le piston 20 et le corps principal 18 et permettent également d'éviter qu'il n'y ait des surépaisseurs de matière dans le corps principal 18 au niveau des nervures 25, ce qui est particulièrement intéressant pour une pièce réalisée par moulage.

Par ailleurs, l'orifice d'entrée 14 débouche radialement dans la chambre hydraulique 16, ce qui permet de diminuer l'encombrement axial du cylindre récepteur 10.

Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 qui est représenté dans ces figures est réalisé par emboutissage d'une tôle métallique, par exemple en acier ou en alliage d'aluminium, mais d'autres modes de réalisation, tels que le forgeage ou le moulage, sont envisageables.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Le piston 20 étant réalisé par emboutissage, la paroi transversale 32 est formée par un repli de tôle dont la forme est complémentaire de celle de l'extrémité avant 23 de la tige de commande 22. Plus précisément, la paroi transversale 32 comporte une portion centrale sphérique, de même rayon de courbure que l'extrémité 23 de la tige de commande 22, qui est reliée à l'extrémité axiale arrière 54 de la jupe 36 par une portion conique qui autorise un léger débattement angulaire de la tige de commande 22 autour de son extrémité avant 23.

Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions.

Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Le tronçon arrière 40 de la jupe 36 du piston 20 coulisse axialement dans la partie arrière 26 du corps de cylindre 17.

Plus précisément, le tronçon arrière 40 coopère avec un tube arrière de guidage 50 qui est emboîté axialement dans la partie arrière 26 du corps principal 18 et dont une surface cylindrique interne 52 est de diamètre sensiblement égal au diamètre de la surface cylindrique interne 42 de la partie avant 24 du corps principal 18. Le tube 50 est avantageusement en matière plastique.

Le tube arrière 50 comporte une surface cylindrique externe 110 lisse et la partie arrière 26 du corps principal 18 comporte une surface cylindrique interne 70 correspondante si bien que le montage du tube 50 dans le corps principal 18 peut se faire par simple emboîtement axial et permet d'obtenir de manière simple une très bonne coaxialité du tube 50 dans par rapport au corps principal 18.

Etant donné la grande longueur axiale des surfaces cylindriques 110, 70 correspondantes du tube 50 et du corps principal 18, et grâce à la précision de leur ajustement permise par l'absence de filetage, il est possible de ne pas prévoir de joint d'étanchéité entre ces deux surfaces tout en garantissant une bonne étanchéité, contrairement à l'art antérieur connu faisant appel à un filetage.

L'extrémité axiale arrière 58 du tube arrière 50 affleure à l'extrémité axiale arrière 60 du corps principal 18 et comporte un collet radial interne 62, qui est réalisé sous la forme d'une pièce indépendante rapportée, et qui permet de limiter vers l'arrière la course axiale du piston 20 dans le corps de cylindre 17.

Par ailleurs, l'extrémité axiale arrière 58 du tube 50 dépasse axialement vers l'arrière au delà de l'extrémité arrière 60 du corps principal 18 et comporte un collet radial externe 106 qui est agencé en regard de l'extrémité arrière 60 du corps principal 18.

Selon l'invention, le tube arrière 50 est fixé dans le corps principal 50 par soudage local avec apport indirect de chaleur grâce à au moins une source d'énergie du type laser. Ici, un laser émet un faisceau dirigé, dont le rayonnement est dans le domaine de l'infrarouge. Le tube arrière 50 est ici en matière identique à celle du corps principal 18 transparente au rayonnement, notamment au rayonnement infrarouge, car le laser est placé à l'extérieur du corps principal 18. Ce tube 50 est pourvu en son sein d'additifs tels que des pigments, par exemple un faible pourcentage de charbon en sorte qu'il absorbe le rayonnement infrarouge et s'échauffe localement.

Lors de l'opération de soudage, on peut faire tourner le laser par rapport à la pièce ou vice versa ; on obtient ainsi un cordon de soudure continu.

Outre une mise en oeuvre simplifiée, une telle fixation permet d'assurer une étanchéité complémentaire entre ces deux éléments.

Dans une forme de réalisation, le soudage est réalisé au niveau du collet 106. Le soudage est effectué au moins en partie entre les faces en regard du collet radial 106 du tube arrière 50 et de l'extrémité axiale arrière 60 du corps principal 18.

En variante, ce soudage est effectué entre les deux surfaces cylindriques complémentaires du tube arrière 50 et du corps principal 18 sur une position et une longueur voulue correspondant à une soudure continue, le collet 106 peut alors être supprimé.

Cela peut être réalisé à l'aide d'un masque doté d'une fenêtre pour laisser passer de manière directive le faisceau émis par le laser et permettant de serrer les pièces 18, 50 à souder.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

L'étanchéité de la chambre hydraulique 16 par rapport à l'extérieur est assurée par deux joints d'étanchéité, primaire 66 et secondaire 68, qui sont portés par le corps de cylindre 17 et coopèrent avec la surface cylindrique externe 48 de la jupe annulaire 36 du piston 20. Les joints 66, 68 sont décalés axialement l'un par rapport à l'autre.

Dans ce premier exemple de réalisation, le joint d'étanchéité primaire est réalisé sous la forme d'un joint composite 66.

Le joint composite 66 comporte essentiellement une bague interne 88 annulaire en matériau à faible coefficient de frottement tel que le «Téflon», et un anneau externe 90 en matière élastomère et il est destiné à être monté serré dans un logement cylindrique 92 formé dans la paroi transversale 78 qui délimite les parties avant 24 et arrière 26 du corps principal 18.

Le logement cylindrique 92 est d'un diamètre compris entre celui des surfaces cylindriques internes 70, 42 respectivement des parties arrière 26 et avant 24 du corps principal 18, et il débouche dans la partie arrière 26 par un chanfrein 95.

Lorsqu'il est en position montée, le joint composite 66 est en butée axialement vers l'avant contre une face axiale avant 94 du logement 92 et il est serré radialement entre la surface cylindrique latérale 93 du logement 92 et la surface cylindrique externe 48 du piston 20.

L'anneau externe 90 en matière élastomère permet, en se déformant, de bien maîtriser la force de serrage appliquée sur la bague interne 88 tout en rattrapant un éventuel défaut de coaxialité entre le piston 48 et le corps de cylindre 17.

On obtient de la sorte une pression de contact entre la bague interne 88 et le piston 48 qui est homogène sur toute la circonférence du piston 48 et on obtient une excellente étanchéité sans pour autant induire des forces de frottement importantes entre le piston 20 et le corps de cylindre 17.

Il est nécessaire, pour le bon fonctionnement du joint composite 66, que la bague interne 88 et l'anneau externe 90 soient agencés axialement dans le même plan et il est prévu à cet effet une rondelle annulaire d'appui 96 particulière.

La rondelle annulaire d'appui 96 est en appui par la périphérie externe 98 de sa face avant contre la face arrière 100 de la paroi transversale 78 et la périphérie interne de sa face avant possède un bossage central 102 qui permet de serrer le joint composite 66 contre la face axiale avant 94 du logement cylindrique 92.

La rondelle d'appui 96 est elle-même maintenue axialement contre la paroi transversale 78 par l'extrémité axiale avant 74 du tube arrière de guidage 50 qui est en appui contre sa face arrière 104. Le bossage central 102 de la face avant de la rondelle d'appui 96 est relié à la périphérie externe 98 par un profil correspondant au chanfrein 95, ce qui permet d'obtenir, par leur coopération, un très bon centrage de la rondelle d'appui 96 dans le corps principal 18.

Dans l'exemple de réalisation de l'invention qui est représenté sur les figures, le joint secondaire 68 est agencé dans un logement cylindrique 76 qui est formé dans la surface cylindrique interne 52 du tube arrière 50 et qui débouche dans l'extrémité avant 74 de ce tube 50, et le joint secondaire 68 est réalisé sous la forme d'une coupelle à lèvres et est en élastomère.

Toutefois, le joint secondaire 68 pourrait aussi être réalisé sous la forme d'un joint composite.

En variante, on peut également prévoir que les deux joints d'étanchéité primaire 66 et secondaire 68 soient agencés dans des logements cylindriques formés à l'extrémité avant du tube arrière de guidage 50. Ce joint d'étanchéité dynamique 68 est ménagé lors du soudage car celui ci est réalisé de préférence à l'écart du joint 68 et donc du joint 66. Le cylindre de commande est ainsi fiable et économique.

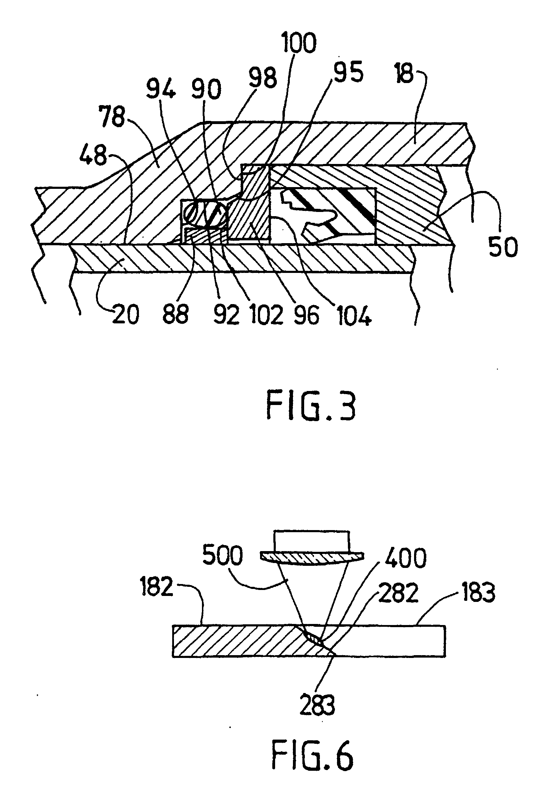

Selon un aspect le montage d'un cylindre récepteur 10, tel que celui représenté sur les figures 1 à 3, est réalisé par séries d'opérations d'emboîtement axial effectuées successivement dans la même direction, ce qui est particulièrement intéressant en vue de l'automatisation du montage.

Dans ce cas, le joint secondaire 68 et le piston 20 sont agencés successivement dans le tube 50 puis la rondelle d'appui particulière 96 et le joint composite sont introduits autour du piston 20 en appui contre l'extrémité axiale avant 74 du tube arrière 50.

Le corps principal 18 est alors emboîté axialement autour de ces éléments prémontés, sans qu'il soit nécessaire de le faire tourner autour de son axe.

Lorsque le joint composite 66 arrive au contact du chanfrein 95 de son logement cylindrique 92, il est forcé axialement à l'intérieur du logement 92 par le bossage périphérique interne 102 de la rondelle d'appui 96 jusqu'au fond du logement 92.

Le chanfrein 95 permet notamment de faciliter l'introduction du joint 66 dans le logement 92.

Une telle conception d'un cylindre récepteur 10 permet donc de réaliser une étanchéité particulièrement fiable et performante de la chambre d'étanchéité 16 tout en favorisant la facilité de montage du cylindre 10.

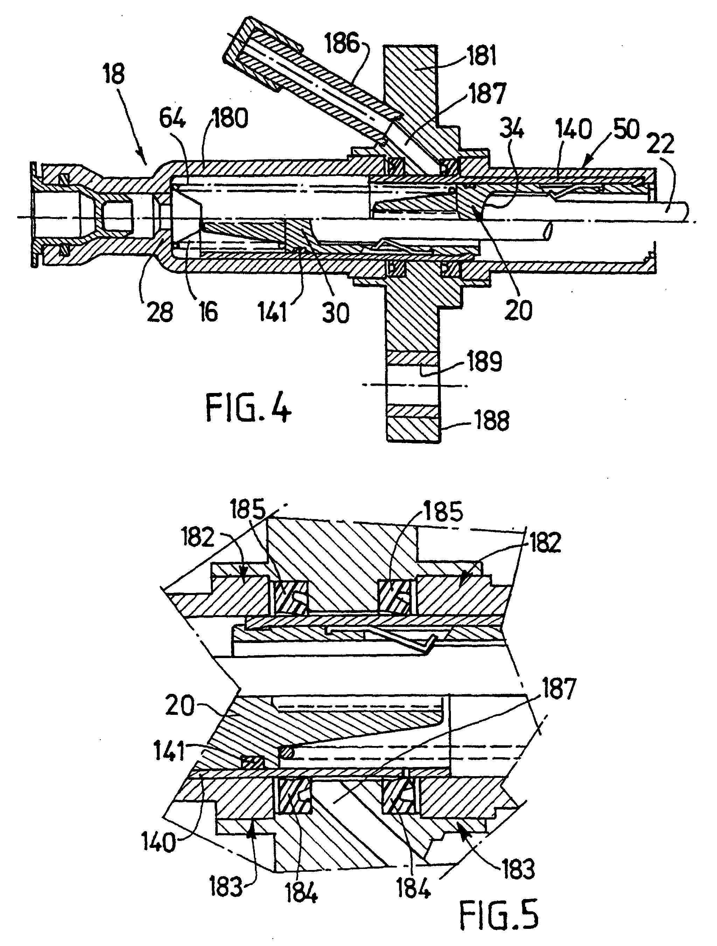

On a représenté sur les figure 4 et 5 une variante de réalisation de l'invention. Dans ces figures les éléments identiques à ceux des figures 1 à 3 seront affectés des même signes de référence et le corps principal 18 est en deux pièces intérieurement creuse 180,181 en matière plastique moulable à savoir une pièce avant borgne 180 avec l'orifice d'entrée 14, ici d'orientation axiale, et une pièce intermédiaire 181 formant la partie arrière du corps 18 dans laquelle est rapporté le tube 50.

Le piston 20 délimite par sa face avant 30 l'arrière de la chambre hydraulique 16 délimitée également par la pièce avant 180 sachant que l'orifice 14 débouche dans la chambre 16. Dans la partie haute de la figure 4 le piston est en position avancée, tandis que dans la partie basse de cette figure il est en position reculée.

Une chemise métallique de piston 140 entoure le piston 20 en étant fixée axialement au piston 20 ici en matière plastique. Pour plus de précisions, notamment sur la fixation axiale de la chemise on se reportera à la demande FR 98 07213 déposée le 09/06/1998.

La chemise 140 est guidée axialement par le tube arrière 50 et la pièce avant 180 de même diamètre interne, tandis qu'un jeu radial existe entre la chemise et la périphérie interne de la pièce 181. La pièce avant 180 et le tube 50 sont ici en matière identique pigmentée pour absorber le rayonnement infrarouge émis par le laser permettant de souder la pièce intermédiaire 181, transparente au rayonnement infrarouge, avec respectivement la pièce avant 180 et avec le tube arrière 50.

Pour ce faire la pièce 180 et le tube 50 présentent respectivement à l'arrière et à l'avant une surépaisseur tubulaire 182 tandis que la pièce intermédiaire en forme de plaque présente à chacune de ses extrémités axiales une portion tubulaire 183 emmanchée axialement chacune sur la surépaisseur concernée 182. Ici par facilité on utilise deux laser à savoir un par zone de soudage 182,183.

Des échancrures 184 sont ménagées aux extrémités axiales de la pièce 181 pour montage de joints d'étanchéité dynamique 185 en contact avec la périphérie interne de la chemise 140 mobile axialement par rapport aux joints 185. La chemise est dotée de perçages non référencés propres à être obturés par le joint avant 185 . Un perçage incliné 187 est réalisé dans la pièce intermédiaire en matière plastique et débouche entre les deux joints 185 portés par la pièce 181 et immobilisés axialement par les surépaisseurs 182. Le perçage 187 communique avec un conduit 186 propre à être relié par une canalisation avec un réservoir de réalimentation.

La pièce 181 présente des oreilles dont l'une est visible en 188 et est trouée en 189 pour fixation du cylindre émetteur sur une partie fixe du véhicule par exemple à l'aide de vis. Le soudage selon l'invention est réalisé localement au niveau des surépaisseurs 182 et des portions 183 sans risque d'endommager les joints 185 .La pièce 181 est une pièce d'adaptation et permet une standardisation des pièces 180, 50 de forme simple, tout cela est rendu possible grâce à l'invention car ici le ou les lasers peuvent être positionnés à distance des zones à souder 182,183 contrairement aux sonotrodes du soudage à ultrason. L'opération de soudage peut être réalisée à l'aide de deux lasers pour réaliser conjointement les deux soudages. En variante, cette opération de soudage peut être réalisée en deux étapes consécutives à l'aide d'un seul laser.

L'invention a été ci-dessus décrite pour un cylindre récepteur, mais on pourra transposer aisément les enseignements de l'invention pour réaliser un cylindre émetteur de structure similaire.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, au contact du diaphragme.

En pressurisant la chambre 16 on déplace le piston et donc la tige 22, la fourchette de débrayage et la butée de débrayage. Lorsque le piston 20 occupe la position reculée, l'embrayage est alors désengagé.

Il est avantageux que le tube 50, soit en matière plastique de façon qu'il se dilate de la même manière que le corps principal 18. En outre le tube arrière 50 ainsi que le corps principal 18 servent au guidage du piston.

Dans ce cas le corps principal et le tube arrière sont avantageusement en matière synthétique, ici en matière plastique à faible coefficient de frottement. On appréciera, lorsque le piston est embouti, que l'on réduise l'encombrement axial puisque la tige de commande pénètre à l'intérieur au moins de la spire d'extrémité du ressort 64.

Dans tous les cas le tube arrière 50 s'engage à la manière d'un bouchon dans le corps principal 18.

Bien entendu on peut prévoir un joint torique entre la périphérie interne du corps principal 18 et la périphérie externe du tube arrière, ledit joint étant monté par exemple dans une gorge du corps principal.

Toute fuite est ainsi évitée à ce niveau, en sorte que le soudage peut être réalisé de manière discontinu.

Dans toutes les formes de réalisation décrites, on réalise un serrage radial entre les pièces en sorte que les surfaces des pièces à souder se trouvent sous contrainte ce qui favorise le soudage, ce serrage peut par exemple être obtenu par emboîtement à force des pièces. En variante, l'une des pièces peut être fragmentée en pattes venant se serrer radialement contre l'autre pièce. Dans ce cas, il est avantageux de prévoir un joint torique supplémentaire comme expliqué précédemment.

Bien entendu, on peut prévoir sur le piston des patins de guidage, en matière à faible coefficient de frottement.

Dans les exemples décrit précédemment le faisceau laser arrive de préférence globalement perpendiculairement aux surfaces à souder. Bien entendu, le faisceau laser peut être incliné par rapport aux surfaces, ce qui offre une liberté de conception plus grande pour les pièces à souder notamment par rapport au soudage à ultrason.

En variante, si le plan d'assemblage des pièces à souder est incliné on réalisera alors un serrage axial entre les deux pièces pour favoriser le soudage. Ainsi à la figure 6, on a représenté de façon schématique la surépaisseur 182 avec une extrémité libre 282 inclinée et en 183 la portion tubulaire avec une extrémité libre 283, les deux surfaces des extrémités 282 et 283 sont serrées l'une contre l'autre afin de faciliter l'opération de soudage réalisée localement entre ces surfaces en 400. On voit en 500 le faisceau laser perpendiculaire à la surépaisseur 182 et la portion tubulaire 183 dans le prolongement l'une de l'autre. En variante, on inverse les structures en sorte que les deux surfaces sont perpendiculaires et le laser est incliné.

Ainsi le tube 50 et le corps principal 18 coopèrent frontalement à serrage axial par des surfaces ou faces complémentaires 282, 283. Toutes les combinaisons sont possibles, ainsi à la figure 1, le collet 106 et le corps principal 18 peuvent avoir des surfaces complémentaires de soudage qui ne sont pas nécessairement transversales.

Le soudage peut aussi être réalisé de l'intérieur, le faisceau traversant d'abord le tube arrière alors réalisé en matière plastique transparente au rayonnement infrarouge.

Dans tous les cas, l'un des éléments tube arrière 50 - corps principal 18 est en matière transparente au rayonnement infrarouge, tandis que l'autre élément est conformé pour absorber ledit rayonnement. Cette conformation est réalisée par exemple à l'aide d'au moins un additif tel que du charbon par exemple avec une teneur de 1 à 2 %.

## Revendications

1. Dispositif de commande hydraulique notamment de freinage ou d'un embrayage de véhicule automobile, comportant au moins un cylindre de commande (10), dans lequel le cylindre (10) comporte un corps de cylindre (17) sensiblement tubulaire dans lequel coulisse axialement un piston (20) qui délimite, par une face transversale avant (30), une chambre hydraulique (16) cylindrique, du type dans lequel un orifice de raccordement (14) d'une canalisation (12) débouche dans la chambre hydraulique (16), du type dans lequel le corps de cylindre (17) est réalisé en au moins deux parties en matière synthétique, tel que de la matière plastique, qui comprennent un corps principal (18) et un tube arrière (50) de guidage qui est assemblé par soudage avec une partie arrière (26,181) du corps principal (18) et qui participe au guidage du piston (20) dans le cylindre (10), et du type dans lequel au moins un joint dynamique d'étanchéité intervient entre le piston (20) et le tube arrière (50) pour assurer l'étanchéité de la chambre hydraulique (16), le soudage du tube arrière (50) avec le corps principal (18) étant réalisé localement par apport indirect de chaleur à l'aide d'au moins une source d'énergie du type laser dont le rayonnement en forme de faisceau est émis dans le domaine du rayonnement infrarouge,
**caractérisé en ce que** l'un des éléments tube arrière (50) - corps principal (18) est en matière transparente au rayonnement infrarouge, tandis que l'autre élément est conformé pour absorber ledit rayonnement.

2. Dispositif selon la revendication précédente, **caractérisé en ce que** ledit autre élément est en matière transparente audit rayonnement et dotée d'au moins un additif pour absorber ledit rayonnement.

3. Dispositif selon la revendication 1, **caractérisé en ce que** ledit autre élément est en matière absorbant ledit rayonnement.

4. Dispositif selon l'une des revendications précédentes, **caractérisé en ce que** le soudage du tube arrière (50) avec le corps principal (18) est continu et étanche.

5. Dispositif selon l'une quelconque des revendications 1 à 3, **caractérisé en ce que** le soudage du tube arrière (50) avec le corps principal (18) est discontinu et **en ce que** des moyens d'étanchéité supplémentaires interviennent entre le tube arrière (50) et le corps principal (18).

6. Dispositif selon l'une quelconque des revendications précédentes, **caractérisé en ce que** le tube arrière (50) coopère à serrage avec le corps principal (18).

7. Dispositif selon la revendication précédente, **caractérisé en ce que** le tube arrière (50) et le corps principal (18) coopèrent par des surfaces cylindriques complémentaires (70, 110) emboîtées à serrage radial l'une dans l'autre.

8. Dispositif selon la revendication précédente, **caractérisé en ce que** le soudage est effectué au moins en partie entre deux surfaces cylindriques complémentaires (70, 110) du tube arrière (50) et du corps principal (18).

9. Dispositif selon la revendication 6, **caractérisé en ce que** le tube arrière (50) et le corps principal (18) coopèrent frontalement à serrage axial par des surfaces complémentaires (282, 283).

10. Dispositif selon la revendication précédente, **caractérisé en ce que** le soudage est effectué au moins en partie entre les faces en regard d'un collet radial (106) du tube arrière (50) et de l'extrémité axiale arrière (60) du corps principal (18).

11. Dispositif selon l'une quelconque des revendications précédentes, **caractérisé en ce que** le corps principal (18) est en deux pièces rapportées l'une sur l'autre à savoir une pièce avant (180) délimitant la chambre hydraulique (16) et la pièce centrale (181) constituant la partie arrière du corps principal (18) dans laquelle est rapportée par soudage le tube arrière (50) de guidage.

## Patentansprüche

1. Hydraulische Betätigungsvorrichtung einer Bremsanlage oder einer Kupplung für Kraftfahrzeuge, die wenigstens einen Betätigungszylinder (10) enthält, wobei der Zylinder (10) einen in etwa rohrförmigen Zylinderkörper (17) umfasst, in dem ein Kolben (20) axial gleitend verschiebbar gelagert ist, der über eine vordere Querfläche (30) eine zylindrische Hydraulikkammer (16) begrenzt, wobei eine Anschlussöffnung (14) für einen Kanal (12) in der Hydraulikkammer (16) mündet, wobei der Zylinderkörper (17) aus wenigstens zwei Teilen aus synthetischem Material, etwa aus Kunststoff, ausgeführt ist, die einen Hauptkörper (18) und ein hinteres Führungsrohr (50) umfassen, das durch Schweißen mit einem hinteren Teil (26, 181) des Hauptkörpers (18) verbunden ist und das an der Führung des Kolbens (20) im Zylinder (10) mitwirkt, und wobei wenigstens eine dynamische Dichtung zwischen dem Kolben (20) und dem hinteren Rohr (50) zum Einsatz kommt, um die Abdichtung der Hydraulikkammer (16) sicherzustellen, und wobei die Verschweißung des hinteren Rohrs (50) mit dem Hauptkörper (18) örtlich durch indirekte Wärmezufuhr mit Hilfe wenigstens einer Energiequelle des Typs Laser erfolgt, deren in Form eines Strahlenbündels abgegebene Strahlung im Bereich der Infrarotstrahlung liegt, **dadurch gekennzeichnet, dass** eines der Elemente hinteres Rohr (50) - Hauptkörper (18) aus einem für die Infrarotstrahlung durchlässigen Werkstoff besteht, während das andere Element so beschaffen ist, dass es die besagte Strahlung absorbiert.

2. Vorrichtung nach dem vorhergehenden Anspruch, **dadurch gekennzeichnet, dass** das besagte andere Element aus einem für die besagte Strahlung durchlässigen Werkstoff besteht und mit wenigstens einem Zusatz versehen ist, um die besagte Strahlung zu absorbieren.

3. Vorrichtung nach Anspruch 1, **dadurch gekennzeichnet, dass** das besagte andere Element aus einem die besagte Strahlung absorbierenden Werkstoff besteht.

4. Vorrichtung nach einem der vorhergehenden Ansprüche, **dadurch gekennzeichnet, dass** die Verschweißung des hinteren Rohrs (50) mit dem Hauptkörper (18) durchgehend und dicht ist.

5. Vorrichtung nach einem der Ansprüche 1 bis 3, **dadurch gekennzeichnet, dass** die Verschweißung des hinteren Rohrs (50) mit dem Hauptkörper (18) unterbrochen ist und dass zwischen dem hinteren Rohr (50) und dem Hauptkörper (18) zusätzliche Dichtungsmittel zum Einsatz kommen.

6. Vorrichtung nach einem der vorhergehenden Ansprüche, **dadurch gekennzeichnet, dass** das hintere Rohr (50) mittels Einspannung mit dem Hauptkörper (18) zusammenwirkt.

7. Vorrichtung nach dem vorhergehenden Anspruch, **dadurch gekennzeichnet, dass** das hintere Rohr (50) und der Hauptkörper (18) durch formschlüssige zylindrische Flächen (70, 110) zusammenwirken, die mit radialer Einspannung ineinander eingepasst sind.

8. Vorrichtung nach dem vorhergehenden Anspruch, **dadurch gekennzeichnet, dass** die Verschweißung wenigstens teilweise zwischen zwei formschlüssigen zylindrischen Flächen (70, 110), des hinteren Rohrs (50) und des Hauptkörpers (18) erfolgt.

9. Vorrichtung nach Anspruch 6, **dadurch gekennzeichnet, dass** das hintere Rohr (50) und der Hauptkörper (18) stimseitig mit axialer Einspannung durch formschlüssige Flächen (282, 283) zusammenwirken.

10. Vorrichtung nach dem vorhergehenden Anspruch, **dadurch gekennzeichnet, dass** die Verschweißung wenigstens teilweise zwischen den gegenüberliegenden Flächen eines radialen Bunds (106) des hinteren Rohrs (50) und des hinteren axialen Endes (60) des Hauptkörpers erfolgt.

11. Vorrichtung nach einem der vorhergehenden Ansprüche, **dadurch gekennzeichnet, dass** der Hauptkörper (18) aus zwei aneinander angefügten Teilen besteht, und zwar aus einem vorderen Teil (180), der die Hydraulikkammer (16) begrenzt, und dem mittleren Teil (181), der den hinteren Teil des Hauptkörpers (18) bildet, in dem das hintere Führungsrohr (50) durch Schweißen angefügt ist.

## Claims

1. Hydraulic control device, in particular for the brakes or clutch of a motor vehicle, comprising at least one control cylinder (10), in which the cylinder (10) comprises a substantially tubular cylinder body (17) in which there slides axially a piston (20) which delimits, by means of a front transverse face (30), a cylindrical hydraulic chamber (16), of the type in which a connection orifice (14) of a duct (12) opens out in the hydraulic chamber (16), of the type in which the cylinder body (17) is produced in at least two parts from synthetic material, such as plastics material, which comprise a main body (18) and a rear guide tube (50) which is connected by welding to the rear part (26, 181) of the main body (18) and which participates in the guidance of the piston (20) in the cylinder (10), and of the type in which at least one dynamic sealing joint acts between the piston (20) and the rear tube (50) in order to provide impermeability of the hydraulic chamber (16), the welding of the rear tube (50) to the main body (18) being carried out locally by the indirect provision of heat by means of at least one energy source of the laser type, the radiation of which, in the form of a beam, is emitted in the infrared radiation range, **characterised in that** one of the elements consisting of rear tube (50) and main body (18) is made from material transparent to infrared radiation, whilst the other element is formed so as to absorb the said radiation.

2. Device according to the preceding claim, **characterised in that** the said other element is made from material transparent to the said radiation and provided with at least one additive for absorbing the said radiation.

3. Device according to Claim 1, **characterised in that** the other element is made from material absorbing the said radiation.

4. Device according to one of the preceding claims, **characterised in that** the welding of the rear tube (50) to the main body (18) is continuous and impermeable.

5. Device according to any one of Claims 1 to 3, **characterised in that** the welding of the rear tube (50) to the main body (18) is discontinuous and **in that** additional sealing means intervene between the rear tube (50) and the main body (18).

6. Device according to any one of the preceding claims, **characterised in that** the rear tube (50) cooperates by clamping with the main body (18).

7. Device according to the preceding claim, **characterised in that** the rear tube (50) and the main body (18) cooperate through complementary cylindrical surfaces (70, 110) fitted one in the other with radial clamping.

8. Device according to the preceding claim, **characterised in that** the welding is carried out at least partly between two complementary cylindrical surfaces (70, 110) of the rear tube (50) and main body (18).

9. Device according to Claim 6, **characterised in that** the rear tube (50) and the main body (18) cooperate frontally with axial clamping through complementary surfaces (282, 283).

10. Device according to the preceding claim, **characterised in that** the welding is carried out at least partly between the opposite faces of a radial collar (106) on the rear tube (50) and of the rear axial end (60) of the main body (18).

11. Device according to any one of the preceding claims, **characterised in that** the main body (18) is in two pieces attached to each other, namely a front piece (180) delimiting the hydraulic chamber (16) and the central piece (181) constituting the rear part of the main body (18) in which the rear guide tube (50) is attached by welding.
